(19) Europäisches Patentamt
European Patent Office
Office européen des brevets

(11) EP 1 231 596 B1

(12) EUROPÄISCHE PATENTSCHRIFT

(45) Veröffentlichungstag und Bekanntmachung des Hinweises auf die Patenterteilung:
**28.09.2005 Patentblatt 2005/39**

(51) Int Cl.[7]: **G10L 15/18**

(21) Anmeldenummer: **02100121.9**

(22) Anmeldetag: **08.02.2002**

(54) **Trainingsmethode von den freien Parameten eines Maximum-Entropie-Sprachmodells**

Training methode of the free parameters in a maximum entropy language model

Méthode d'entraînement des paramètres libres d'un modèle de language à entropie maximale

(84) Benannte Vertragsstaaten:
**DE FR GB**

(30) Priorität: **13.02.2001 DE 10106581**

(43) Veröffentlichungstag der Anmeldung:
**14.08.2002 Patentblatt 2002/33**

(73) Patentinhaber:
- **Philips Intellectual Property & Standards GmbH 20099 Hamburg (DE)**
  Benannte Vertragsstaaten:
  **DE**
- **Koninklijke Philips Electronics N.V. 5621 BA Eindhoven (NL)**
  Benannte Vertragsstaaten:
  **DE FR GB**

(72) Erfinder: **Peters, Jochen,**
**c/o Philips Corporate IntProp.GmbH**
**52066 Aachen (DE)**

(74) Vertreter: **Volmer, Georg et al**
**Philips Intellectual Property & Standards GmbH,**
**Postfach 50 04 42**
**52088 Aachen (DE)**

(56) Entgegenhaltungen:
**US-A- 6 049 767**

- **J. PETERS AND D. KLAKOW: "Compact maximum entropy language models" ASRU'99, 12. - 15. Dezember 1999, XP002196814 Keystone, Colorado**
- **J. WU AND S. KHUDANPUR: "Efficient training methods for maximum entropy language modeling" ICSLP'2000, Bd. 3, Oktober 2000 (2000-10), Seiten 114-117, XP002196896 Beijing, China**
- **SIMONS M ET AL: "Distant bigram language modelling using maximum entropy" 1997 IEEE INTERNATIONAL CONFERENCE ON ACOUSTICS, SPEECH, AND SIGNAL PROCESSING, ICASSP-97, LOS ALAMITOS, CA, USA, IEEE COMPUT. SOC, US, 21. - 24. April 1997, Seiten 787-790, XP010225912 MUNICH, GERMANY ISBN: 0-8186-7919-0**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 231 596 B1

## Beschreibung

Die Erfindung betrifft ein Verfahren zum iterativen Berechnen freier Parameter $\lambda_\alpha^{ortho(n)}$ eines Maximum-Entropie-Sprachmodells MESM in einem Spracherkennungssystem mit Hilfe des Generalised-Iterative-Scaling-Trainingsalgorithmus gemäß folgender Formel:

$$\lambda_\alpha^{ortho(n+1)} = G(\lambda_\alpha^{ortho(n)}, m_\alpha^{ortho}, ...) \quad (1)$$

wobei:

n : einen Iterationsparameter;
G : eine mathematische Funktion;
$\alpha$: ein Merkmal in dem MESM; und
$m_\alpha^{ortho}$ : einen gewünschten orthogonalisierten Randwert in dem MESM für das Merkmal $\alpha$ bezeichnen.

Die Erfindung betrifft weiterhin ein im Stand der Technik bekanntes computerunterstütztes Spracherkennungssystem sowie eine bekannte computerunterstützte Trainingseinrichtung, in denen das beschriebene Verfahren eingesetzt wird.

Ausgangspunkt für die Erstellung eines Sprachmodells, wie es in einem computergestützten Spracherkennungsystem zur Erkennung von eingegebener Sprache verwandt wird, ist eine vordefinierte Trainingsaufgabe. Die Trainingsaufgabe bildet bestimmte statistische Muster in der Sprache eines zukünftigen Benutzers des Spracherkennungssystems in ein System von mathematisch formulierten Randbedingungen ab, welches im allgemeinen folgende Gestalt hat:

$$\sum_{(h,w)} N(h) \cdot p\ (w \mid h) \cdot f_\alpha(h,w) = m_\alpha \quad (2)$$

wobei:

N(h) : die Häufigkeit der Historie h in einem Trainingskorpus;

$p_{(w|h)}$ : Wahrscheinlichkeit p(w|h), mit welcher sich ein vorgegebenes Wort w an eine bisherige Wortfolge h (Historie) anschließt;

$f_{\alpha(h,w)}$ : eine binäre Merkmalsfunktion für ein Merkmal $\alpha$; und

$m_\alpha$ : einen gewünschten Randwert in dem System von Randbedingungen;

bezeichnet.

Die Lösung dieses Systems von Randbedingungen, d.h. der Trainingsaufgabe, wird durch das sogenannte Maximum Entropie Sprachmodell MESM gebildet, welches eine geeignete Lösung des Systems von Randbedingungen in Form einer geeigneten Definition der Wahrscheinlichkeit p(w|h) angibt, die wie folgt lautet:

$$p(w \mid h) = p\lambda(w|h) = \frac{1}{Z_\lambda(h)} \cdot \exp\left(\sum_\alpha \lambda_\alpha \cdot f_\alpha(h,w)\right) \quad (3)$$

wobei:

$Z\lambda$ (h) : einen historienabhängigen Normierungsfaktor;

$\lambda\alpha$ : einen freien Parameter zum Merkmal $\alpha$;
$\lambda$ : den Satz aller Parameter

bezeichnen. Für die übrigen Parameter gilt ihre obige Definition.

Die binäre Merkmalsfunktion $f\alpha(h,w)$ trifft beispielsweise eine binäre Entscheidung, ob vorgegebene Worte an bestimmten Stellen in vorgegebenen Wortfolgen h,w enthalten sind.

Ein Merkmal $\alpha$ kann im allgemeinen ein einzelnes Wort, eine Wortfolge, eine Wortklasse (z.B. Farbe oder Verben), eine Folge von Wortklassen oder komplexere Muster bezeichnen.

In Fig. 4 sind vorbestimmte Merkmale in einem Sprachmodell beispielhaft dargestellt. So repräsentieren die dargestellten Unigramme jeweils ein einzelnes Wort, die Bigramme jeweils eine Wortfolge bestehend aus zwei Worten und das abgebildete Trigramm eine Wortfolge bestehend aus drei Worten. Das Bigramm "OR A" schließt das Unigramm "A" ein und umfasst darüber hinaus ein weiteres Wort; es wird deshalb als höher-reichweitig gegenüber dem Unigramm "A" bezeichnet. Analog ist das Trigramm "A WHITE HOUSE" von höherer Reichweite als das Unigramm "HOUSE" oder als das Bigramm "WHITE HOUSE".

Die freien Parameter $\lambda$ werden so angepasst, dass Gleichung 3 eine Lösung für das System von Randbedingungen gemäß Gleichung 2 darstellt. Diese Anpassung erfolgt üblicherweise mit Hilfe bekannter Trainingsalgorithmen. Ein Beispiel für einen derartigen Trainigsalgorithmus ist der sogenannte Generalized Iterative Scaling GIS- Algorithmus, wie er z.B. in J.N. Darroch and D. Ratcliff, "Generalized iterative scaling for log linear models" Annals Math. Stat., 43(5):1470-1480, 1972 beschrieben wird.

Dieser GIS-Algorithmus sieht eine iterative Berechnung der freien Parameter $\lambda$ vor. Traditionell erfolgt diese Berechnung allerdings recht langsam. Zur Beschleunigung dieser Berechnung wird im Stand der Technik vorgeschlagen, die Merkmalsfunktionen $f_\alpha$ (h,w) in dem System von Randbedingungen gemäß Gleichung (2) durch orthogonalisierte Merkmalsfunktionen $f_\alpha^{ortho}$ (h,w) zu substituieren; siehe dazu R. Rosenfeld "A maximum entropy approach to adaptice statistical language modelling"; Computer Speech and Language, 10:187-228, 1996.
Mit der Substitution der Merkmalsfunktionen auf der linken Seite in Gleichung 2 ändern sich allerdings auch die Randwerte $m_\alpha$ auf deren rechter Seite. Damit wird das ursprüngliche System von Randbedingungen, dh die ursprüngliche Trainingsaufgabe bei den üblichen Ansätzen zum Schätzen der Randwerte verändert; siehe dazu Rosenfeld a.a.O., S. 205, 1.Satz des vorletzten Absatzes.

Es ist insofern als Nachteil des Standes der Technik festzustellen, dass bei der beschleunigten Abwicklung des GIS-Algorithmus die freien Parameter $\lambda$ auf eine veränderte Trainingsaufgabe trainiert werden. Die auf diese Weise berechneten Parameter $\lambda$ bewirken bei Einsetzung in Gleichung 3 nur eine unzulängliche Anpassung des Sprachmodells an die ursprüngliche Trainingsaufgabe.

Ausgehend von diesem Stand der Technik ist es die Aufgabe der Erfindung, ein bekanntes computergestütztes Spracherkennungssystem, eine computergestützte Trainingseinrichtung und ein bekanntes Verfahren zum iterativen Berechnen freier Parameter $\lambda_\alpha^{ortho(n)}$ eines Maximum-Entropie-Sprachmodells in dem Spracherkennungssystem derart weiterzubilden, dass sie eine schnelle Berechnung der freien Parameter $\lambda$ ohne Veränderung der ursprünglichen Trainingsaufgabe ermöglichen.

Diese Aufgabe wird gemäß Patentanspruch 1 dadurch gelöst, dass bei dem bekannten, einleitend beschriebenen Verfahren zur Berechnung der freien Parameter $\lambda$ nach dem GIS-Algorithmus jeder gewünschte orthogonalisierte Randwert $m_\alpha^{ortho}$ durch Linearkombination des zugehörigen gewünschten Randwertes $m_\alpha$ mit gewünschten Randwerten $m_\beta$ von zu dem Merkmal $\alpha$ höher-reichweitigen Merkmalen $\beta$ berechnet wird. Hierbei sind $m_\alpha$ und $m_\beta$ gewünschte Randwerte der ursprünglichen Trainingsaufgabe.

Die Verwendung der so berechneten Randwerte $m_\alpha^{ortho}$ ermöglicht vorteilhafterweise eine verbesserte Approximation der freien Parameter $\lambda$ und damit eine Verbesserung des Sprachmodells im Hinblick auf die ursprüngliche Trainingsaufgabe. Diese qualitative Verbesserung ist möglich bei gleichzeitiger Realisierung einer hohen Konvergenzgeschwindigkeit für die freien Parameter $\lambda$ bei deren iterativer Berechnung mit Hilfe des GIS-Algorithmus.

Die Verwendung der erfindungsgemäß berechneten gewünschten orthogonalisierten Randwerte $m_\alpha^{ortho}$ empfiehlt sich für verschiedene Varianten des GIS-Trainingsalgorithmus, wie sie in den Unteransprüchen 12 und 13 beschrieben sind

Die Aufgabe der Erfindung wird weiterhin durch ein Spracherkennungssystem auf Basis des Maximum Entropie Sprachmodells MESM gemäß Patentanspruch 14 und eine Trainingseinrichtung zum Trainieren des MESM gemäß Patentanspruch 15 gelöst.

Durch Benutzen des erfindungsgemäßen Verfahrens in der Trainingseinrichtung erfolgt eine im Vergleich zum

Stand der Technik effektivere Anpassung des MESM in dem Spracherkennungssystem an die individuellen sprachlichen Eigenheiten eines bestimmten Benutzers des Spracherkennungssystems; die Quote mit welcher das Spracherkennungssystem dann die Bedeutungsinhalte in der Sprache des Benutzers richtig erkennt wird wesentlich verbessert.

Ansonsten entsprechen die Vorteile dieses Spracherkennungssystems und der Trainingseinrichtung den oben für das Verfahren diskutierten Vorteilen.

Der Beschreibung der Erfindung sind folgende Figuren beigefügt, wobei

Fig. 1a : ein erfindungsgemäßes Verfahren zur Berechnung

+ 1b : eines gewünschten orthogonalisierten Randwertes $m_\alpha^{ortho}$ beschreibt;

Fig. 2a : ein erfindungsgemäßes Verfahren zur Berechnung

+2b : einer orthogonalisierten Merkmalsfunktion $f_\alpha^{ortho}$ beschreibt;

Fig. 3 : ein Blockschaltbild eines erfindungsgemäßen Spracherkennungssystems;

und

Fig. 4 : einen Merkmalsbaum beschreibt.

Es erfolgt im weiteren zunächst eine detaillierte Beschreibung eines Ausführungsbeispiels der Erfindung unter Bezugnahme auf die Fig. 1a und 1b.

Die Fig. 1a und 1b veranschaulichen ein erfindungsgemäßes Verfahren zum Berechnen eines verbesserten gewünschten orthogonalisierten Randwertes $m_\alpha^{ortho}$ für ein Merkmal $\alpha = \beta 0$ in einem Sprachmodell. In einem ersten Verfahrens-schritt S1 werden gemäß diesem Verfahren alle in dem Sprachmodell definierten Merkmale βi mit i = 1 ... g bestimmt, welche eine sog. höhere Reichweite aufweisen als das vorbestimmte Merkmal $\alpha = \beta 0$, d.h. welche dieses an einer vorbestimmten Stelle einschließen. Anschließend wird in einem Verfahrensschritt S2 für alle Merkmale βi mit i = 0 ... g also auch für das Merkmal $\alpha = \beta 0$, ein gewünschter Randwert mβi der ursprünglichen Trainingsaufgabe berechnet.

Für die Berechnung eines solchen gewünschten Randwertes mβi sind verschiedene Methoden im Stand der Technik bekannt.

Gemäß einer ersten Methode erfolgt die Berechnung dadurch, dass zunächst eine Häufigkeit N(βi) ermittelt wird, mit welcher die zugehörige binäre Merkmalsfunktion fβi bei Anwendung auf einem Trainingskorpus des Sprachmodells den Wert 1 ergibt und dass anschließend der so ermittelte Häufigkeitswert N(βi) geglättet wird.

Gemäß einer zweiten alternativen Methode erfolgt die Berechnung durch Reduktion von Merkmalsmengen in dem Sprachmodell so lange, bis die Randbedingungen keine Widersprüche mehr aufweisen. Eine derartige Reduktion von Merkmalsmengen muss in der Praxis sehr umfangreich sein, weil ansonsten das erzeugte Sprachmodell keine Lösung mehr zu der ursprünglichen Trainingsaufgabe darstellt.

Gemäß einer dritten Methode erfolgt die Berechnung durch Benutzung eines sogenannten induzierenden Sprachmodells, wie es in J.Peters und D.Klakow, "Compact Maximum Entropy Language Models", Proc. ASRU, Keystone, Colorado, 1999 beschrieben ist.

In einem Verfahrensschritt S3 werden nachfolgend alle Merkmale βi nach ihrer Reichweite sortiert, wobei einem Merkmal βi mit der größten Reichweite der Index i = g zugeordnet wird. Dabei kann es durchaus vorkommen, dass einzelnen Reichweitenklassen, also zB. der Klasse Bigramme oder der Klasse Trigramme, mehrere Merkmale βi zugeordnet werden. In diesen Fällen sind mehrere Merkmale βi mit unterschiedlichen, aber aufeinanderfolgenden Indizes i ein und derselben Reichweitenklasse zugeordnet, dh diese Merkmale haben dann jeweils dieselbe RW und gehören derselben Reichweitenklasee an.

Für den Ablauf des Verfahrens, bei welchem in den nachfolgenden Schritten die einzelnen Merkmale βi der Reihe nach ausgewertet werden, ist es wichtig, dass die Merkmale nach absteigender (oder gleichbleibender) Reichweite abgearbeitet werden. Im ersten Durchlauf des Verfahrens wird daher mit einem Merkmal βi begonnen, welches der höchsten Reichweitenklasse zugeordnet ist; vorzugsweise wird i = g gesetzt (siehe Verfahrensschritte S4 und S5 in Fig. 1a).

In einem nachfolgenden Verfahrensschritt S6 wird geprüft, ob es zu dem aktuell ausgewählten Merkmal βi höher- reichweitige Merkmale βk mit $i < k \leq g$ gibt, welche das Merkmal βi einschließen. Beim ersten Durchlauf gehört das Merkmal βi mit i=g, wie oben gesagt, automatisch der Klasse mit der höchsten Reichweite an und deshalb ist die Abfrage in Verfahrensschritt S6 für dieses Merkmal βi zu verneinen. In diesem Fall springt das Verfahren zu Verfahrensschritt S8, wo ein Parameter X zu Null gesetzt wird. Es erfolgt daraufhin eine Berechnung eines verbesserten gewünschten orthogonalisierten Randwertes $m_{\beta i}^{ortho}$ für das Merkmal βi (beim ersten Durchlauf mit i=g) gemäß Verfahrensschritt S9. Wie dort ersichtlich, wird dieser Randwert für das Merkmal βi dem in Schritt S2 berechneten gewünschten Randwert mβi gleichgesetzt, wenn der Parameter X=0 ist (dies ist z.B. beim ersten Durchlauf der Fall).

Die Verfahrensschritte S5 bis S11 werden daraufhin sukzessive für alle Merkmale βi-1 mit i-1 = g-1 ... 0 wiederholt. In Verfahrensschritt S10 findet eine dafür notwendige Neu-Initialisierung des Indexes i statt und in Verfahrensschritt S11 erfolgt eine Abfrage, ob alle Merkmale βi mit i = 0 ... g abgearbeitet worden sind.

Für alle Merkmale βi, für welche höher-reichweitige Merkmale βk mit i < k ≤ g existieren, ist die Abfrage in Verfahrensschritt S6 mit "Ja" zu beantworten. Der Parameter X wird dann nicht zu Null gesetzt, sondern berechnet sich gemäß Verfahrensschritt S7 durch Aufsummierung der entsprechenden, in vorherigen Durchläufen jeweils in Verfahrensschritt S9 berechneten verbesserten gewünschten orthogonalisierten Randwerten $m_{\beta k}^{ortho}$ für die jeweils höher-reichweitigen Merkmale βk.

Sobald in Verfahrensschritt S11 festgestellt worden ist, dass der gewünschte orthogonalisierte Randwert $m_{\beta 0}^{ortho}$ in Verfahrensschritt S9 berechnet worden ist, wird dieser in Verfahrensschritt S12 als $m_{\alpha}^{ortho}$ ausgegeben.

Das soeben ausführlich beschriebene erfindungsgemäße Verfahren zur Berechnung des verbesserten gewünschten orthogonalisierten Randwertes $m_{\alpha}^{ortho}$ lässt sich in Kurzschreibweise gemäß folgender Formel zusammenfassen:

$$m_{\alpha}^{ortho} = m\alpha - \sum_{(*)} m_{\beta}^{ortho} . \qquad (4)$$

Die Summe (*) umfasst alle höher-reichweitigen Merkmale β, welche das vorbestimmte Merkmal α einschließen. Zur Berechnung des Randwertes $m_{\beta}^{ortho}$ ist die genannte Formel quasi rekursiv für jedes Merkmal β immer wieder anzuwenden, bis für bestimmte Merkmale, nämlich jene mit der höchsten Reichweite, der Summenterm verschwindet, weil zu diesen Merkmalen keine höher-reichweitigen existieren. Die gewünschten orthogonalisierten Randwerte für die höchstreichweitigen Merkmale βk entsprechen dann jeweils den ursprünglichen gewünschten Randwerten mβk.

Die Anwendung des erfindungsgemäßen Verfahrens gemäß den Fig. 1a und 1b soll nachfolgend durch Anwendung auf dem folgenden beispielhaften Trainingskorpus eines Sprachmodells erläutert werden. Der Trainingskorpus lautet:

"THAT WAS A RED
OR A GREEN HOUSE
OR A BLUE HOUSE
THIS IS A WHITE HOUSE AND
THAT IS THE WHITE HOUSE"

Das Trainingskorpus besteht aus N = 23 einzelnen Worten. Es sei vorausgesetzt, dass in dem Sprachmodell die gewünschten Unigramm-, Bigramm- und Trigramm-Merkmale gemäß Fig. 4 vordefiniert sind.

Es kann dann durch Anwendung der normalen Merkmalsfunktion fα auf das Trainingskorpus festgestellt werden, dass die Unigramme, Bigramme und Trigramme gemäß Fig. 4 mit folgenden Häufigkeiten in dem Trainingskorpus vorhanden sind:

| Unigramme: | |
|---|---|
| A | 4 |
| HOUSE | 4 |
| IS | 2 |
| OR | 2 |
| THAT | 2 |
| WHITE | 2 |

| Bigramme: | | |
|---|---|---|
| A | WHITE | 1 |
| OR | A | 2 |
| WHITE | HOUSE | 2 |

| Trigramme: | | | |
|---|---|---|---|
| A | WHITE | HOUSE | 1 |

In dem hier gezeigten Beispiel soll der verbesserte gewünschte orthogonaliserte Randwert $m_{\alpha}^{ortho}$ für das Merkmal $\alpha$ = "HOUSE" berechnet werden. Dafür sind zunächst gemäß Verfahrensschritt S1 in Fig. 1a alle zu dem Merkmal $\alpha$ höher-reichweitigen Merkmale zu bestimmen. Es sind dies gemäß Fig. 4 das Bigramm "WHITE HOUSE" und das Trigramm "A WHITE HOUSE". Gemäß Verfahrensschritt S2 sind nun für diese höher-reichweitigen Merkmale, aber auch für das Merkmal $\alpha$ die normalen gewünschten Randwerte zu berechnen, z.B. indem die jeweiligen, oben festgestellten Häufigkeiten geglättet werden. Diese Glättung erfolgt hier beispielhaft durch Subtraktion des Wertes 0,1. Damit ergeben sich folgende normale gewünschte Randwerte:

| | | | |
|---|---|---|---|
| $m\alpha$ | "HOUSE" | = 4 - 0,1 = | 3,9 |
| $m\beta1$ | "WHITE HOUSE" | = 2 - 0,1 = | 1,9 |
| $m\beta2$ | "A WHITE HOUSE" | = 1 - 0,1 = | 0,9. |

Die Merkmale $\alpha$, $\beta_1$, $\beta_2$ werden nun ihrer Reichweite nach sortiert und es werden - beginnend mit dem längstreichweitigen Merkmal - die jeweiligen verbesserten gewünschten orthogonalisierten Randwerte gemäß Formel (6) bzw. gemäß Verfahrensschritt S7 - S9 in Fig. 1a und 1b berechnet:

$$m_{\beta 2}^{ortho} = m_{\beta 2} = 0{,}9 \quad (5)$$

$$m_{\beta 1}^{ortho} = m_{\beta 1} - m_{\beta 2}^{ortho} = 1{,}9 - 0{,}9 = 1 \quad (6)$$

Schließlich berechnet sich der verbesserte gewünschte orthogonalisierte Randwert $m_{\alpha}^{ortho}$ für das Merkmal $\alpha$ zu:

$$m_{\alpha}^{ortho} = m_{\alpha} - m_{\beta 1}^{ortho} - m_{\beta 2}^{ortho} = 3{,}9 - 1 - 0{,}9 = 2 \quad (7)$$

Der so erfindungsgemäß berechnete orthogonalisierte Randwert $m_{\alpha}^{ortho}$ ermöglicht eine ausreichend genaue Berechnung der freien Parameter $\lambda$ und damit der Wahrscheinlichkeit gemäß Formel (1) im Hinblick auf eine ursprüngliche Trainingsaufgabe bei gleichzeitig großer Rechengeschwindigkeit bei Verwendung in dem GIS-Trainingsalgorithmus.

Nachfolgend wird die Verwendung des erfindungsgemäß berechneten Randwertes $m_{\alpha}^{ortho}$ für drei unterschiedliche Varianten des GIS-Trainingsalgorithmus dargestellt.

Bei einer ersten Variante des GIS-Trainingsalgorithmus hat die mathematische Funktion G gemäß Gleichung 1 bei Verwendung des erfindungsgemäß berechneten orthogonalisierten Randwertes $m_{\alpha}^{ortho}$ folgende Gestalt:

$$\lambda_\alpha^{ortho(n+1)} = G(\lambda_\alpha^{ortho(n)}, m_\alpha^{ortho}, ,...)$$
$$= \lambda_\alpha^{ortho(n)} + t_\alpha^{ortho} \cdot \log\left( \frac{[t_\alpha^{ortho} \cdot m_\alpha^{ortho} + b_\alpha]}{[t_\alpha^{ortho} \cdot m_\alpha^{ortho(n)} + b_\alpha]} \cdot \frac{1 - \sum_\gamma [t_\gamma^{ortho} \cdot m_\gamma^{ortho(n)} + b_\gamma]}{1 - \sum_\gamma [t_\gamma^{ortho} \cdot m_\gamma^{ortho} + b_\gamma]} \right) \quad (8)$$

wobei:

| | |
|---|---|
| n : | einen Iterationsparameter; |
| $\alpha$ : | ein gerade betrachtetes Merkmal; |
| $\gamma$ : | alle Merkmale in dem Sprachmodell; |
| $t_\alpha^{ortho}$, $t_\gamma^{ortho}$ : | die Größe eines Konvergenzschrittes; |
| $m_\alpha^{ortho}$, $m_\gamma^{ortho}$ : | gewünschte orthogonalisierte Randwerte in dem MESM für die Merkmale $\alpha$ und $\gamma$; |
| $m_\alpha^{ortho(n)}$, $m_\gamma^{ortho(n)}$ : | iterative Näherungswerte für die gewünschten Randwerte $m_\alpha^{ortho}$, $m_\gamma^{ortho}$ ; und |
| $b\alpha$ und $b\gamma$ : | Konstanten |

bezeichnen.

Die Berechnung der Konvergenzschrittgrößen t und der iterativen Näherungswerte für die gewünschten Randwerte m erfolgt - wie nachfolgend gezeigt wird - durch Verwendung einer erfindungsgemäß definierten orthogonalisierten Merkmalsfunktion $f_\alpha^{ortho}$, welche wie folgt lautet:

$$f_\alpha^{ortho} = f\alpha - \sum_{(*)} f_\beta^{ortho} \quad (9)$$

Es sei an dieser Stelle betont, dass die gemäß Gleichung 9 erfindungsgemäß berechnete orthogonale Merkmalsfunktion $f_\alpha^{ortho}$ in ihrem Betrag der von Rosenfeld a.a.O. vorgeschlagenen Merkmalsfunktion entspricht. Allerdings erfolgt ihre erfindungsgemäße Berechnung, wie in den Fig 2a und 2b veranschaulicht, gänzlich anders. Das Berechnungsverfahren läuft analog ab zu dem in den Fig. 1a und 1b beschriebenen Verfahren zur Berechnung der gewünschten orthogonalisierten Randwerte $m_\alpha^{ortho}$ , wobei lediglich das Symbol für den Randwert m durch das Symbol für die Merkmalsfunktion f und der Parameter X durch die Funktion F zu ersetzen ist. Um Wiederholungen zu vermeiden, wird an dieser Stelle für Erläuterungen des Verfahrens gemäß Fig. 2a und 2b auf die Beschreibung der Fig. 1a und 1b verwiesen.

Mit der so erfindungsgemäß berechneten orthogonalisierten Merkmalsfunktion $f_\alpha^{ortho}$ bzw. $f_\beta^{ortho}$ berechnet sich die Größe der Konvergenzschritte $t_\alpha^{ortho}$ und $t_\gamma^{ortho}$ in Gleichung 8 wie folgt:

$$t_\alpha^{ortho} = t_\gamma^{ortho} = 1/M^{ortho} \text{ mit } M^{ortho} = \max_{(h,w)}\left( \sum_\beta f_\beta^{ortho}(h, w) \right) \quad (10)$$

wobei Mortho für binäre Merkmalsfunktionen $f_\beta^{ortho}$ die maximale Anzahl von Funktionen repräsentiert, welche für dasselbe Argument (h,w) den Wert 1 liefern.

Weiterhin berechnet sich mit der erfindungsgemäß definierten Merkmalsfunktion $f_\alpha^{ortho}$ der iterative Nähe-

rungswert $m_\alpha^{ortho(n)}$ für den gewünschten orthogonalisierten Randwert $m_\alpha^{ortho}$ bei analoger Anwendung der Gleichung (2) wie folgt:

$$m_\alpha^{ortho(n)} = \sum_{(h,w)} N(h) \cdot p^{(n)}(w \mid h) \cdot f_\alpha^{ortho}(h,w) \quad ; \qquad (11)$$

wobei:

N(h) : die Häufigkeit der Historie h im Trainingskorpus; und
$p^{(n)}(w|h)$ : einen Iterationswert für die Wahrscheinlichkeit p(w|h), mit welcher sich ein vorgegebenes Wort wan eine bisherige Wortfolge h (Historie) anschließt;

bezeichnet. Hierbei benutzt $p^{(n)}(w|h)$ die Parameterwerte $\lambda_\alpha^{ortho(n)}$.

Die Verwendung des erfindungsgemäß berechneten varbesserten gewünschten orthogonalisierten Randwertes $m_\alpha^{ortho}$ empfiehlt sich weiterhin für eine zweite Variante des GIS-Trainingsalgorithmus. Hierbei sind die Merkmale des MESM in m Gruppen Ai aufgeteilt, und pro Iteration werden nur die Parameter $\lambda_\alpha^{ortho}$ der Merkmale α aus einer der Gruppen gemäß der folgenden Formel verändert:

$$\begin{aligned}\lambda_\alpha^{ortho(n+1)} &= G(\lambda_\alpha^{ortho(n)}, m_\alpha^{ortho}, \ldots) \\ &= \lambda_\alpha^{ortho(n)} + t_\alpha^{ortho} \cdot \log\left( \frac{m_\alpha^{ortho}}{m_\alpha^{ortho(n)}} \cdot \frac{1 - \sum_{\beta \in Ai(n)} (t_\beta \cdot m_\beta^{ortho(n)})}{1 - \sum_{\beta \in Ai(n)} (t_\beta \cdot m_\beta^{ortho})} \right)\end{aligned} \qquad (12)$$

wobei:

n : der Iterationsparameter
Ai(n) : eine in dem n'ten Iterationsschritt ausgewählte Merkmalsgruppe Ai(n) mit 1 ≤ i ≤ m;
α : ein gerade betrachtetes Merkmal aus der gerade ausgewählten Merkmalsgruppe Ai(n);
β : alle Merkmale aus der Merkmalsgruppe Ai(n);
$t_\alpha^{ortho}$, $t_\beta^{ortho}$ : die Größe eines Konvergenzschrittes mit

$$t_\alpha^{ortho} = t_\beta^{ortho} = 1/M_{i(n)}^{ortho} \quad \text{mit}$$

$$M_{i(n)}^{ortho} = \max_{(h,w)} \left( \sum_{\beta \in Ai(n)} f_\beta^{ortho}(h,w) \right)$$

wobei
$M_{i(n)}^{ortho}$ für binäre Funktionen $f_\beta^{ortho}$ die maximale Anzahl von Funktionen aus der Merkmalsgruppe Ai(n) repräsentiert, welche für dasselbe Argument (h,w) den Wert 1 liefern;
$m_\alpha^{ortho}$, $m_\beta^{ortho}$ : gewünschte orthogonalisierte Randwerte in dem MESM für die Merkmale α bzw. β;

$m_{\alpha}^{ortho(n)}$ , $m_{\beta}^{ortho(n)}$ : iterative Näherungswerte für die gewünschten Randwerte $m_{\alpha}^{ortho}$ , $m_{\beta}^{ortho}$ ;

Die Gruppe Ai(n) von Merkmalen $\alpha$, deren Parameter $\lambda_{\alpha}^{ortho}$ im aktuellen Iterationsschritt angepasst werden, durchläuft dabei zyklisch gemäß i(n)=n(mod m) alle m Gruppen.

Die Verwendung des erfindungsgemäß berechneten gewünschten orthogonalisierten Randwertes $m_{\alpha}^{ortho}$ empfiehlt sich weiterhin für eine dritte Variante des GIS-Trainingsalgorithmus, welche sich von der zweiten Variante lediglich dadurch unterscheidet, dass die bei jedem Iterationsschritt zu verwendende Merkmalsgruppe Ai(n) nicht zyklisch, sondern nach einem vorbestimmten Kriterium $D_{i}^{(n)}$ ausgewählt wird.

In Fig. 3 ist schließlich ein Spracherkennungsystem 10 gemäß der vorliegenden Erfindung dargestellt, welches auf Basis des sog. Maximum-Entropie-Sprachmodells arbeitet. Es umfasst eine Erkennungseinrichtung 12, welche den Bedeutungsinhalt von bereitgestellten Sprachsignalen zu erkennen versucht. Die Sprachsignale werden dem Spracherkennungssystem üblicherweise als Ausgangssignale eines Mikrophons 20 bereitgestellt. Die Erkennungseinrichtung 12 erkennt den Bedeutungsinhalt der Sprachsignale dadurch, dass sie Muster in dem empfangenen akustischen Signal auf vordefinierte Erkennungssymbole, wie z.B. bestimmte Worte, Handlungen oder Ereignisse, mit Hilfe des implementierten Maximum Entropie Sprachmodells MESM abbildet. Schließlich gibt die Erkennungseinrichtung 12 ein Ausgangssignal aus, welches den in dem Sprachsignal erkannten Bedeutungsinhalt repräsentiert und zur Ansteuerung von verschiedensten Geräten, z.B. eines Textverarbeitungsprogramms oder eines Telefons nach Maßgabe durch diesen Bedeutungsinhalt dienen kann.

Für eine möglichst fehlerfreie Ansteuerung der Geräte im Sinne des Bedeutungsinhaltes von steuernder Sprachinformation ist es erforderlich, dass das Spracherkennungssystem 10 die Bedeutungsinhalte der auszuwertende Sprache mit einer möglichst hohen Quote richtig erkennt. Dazu ist eine möglichst gute Anpassung des Sprachmodells an die sprachlichen Besonderheiten des Sprechers, dh des Benutzers des Spracherkennungssystems erforderlich. Diese Anpassungsaufgabe leistet eine Trainingseinrichtung 14, welche entweder extern oder in das Spracherkennungssystem 10 integriert betrieben werden kann. Genauer gesagt dient die Trainingseinrichtung 14 zum Anpassen des MESM in dem Spracherkennungssystem 10 an wiederkehrende statistische Muster in der Sprache eines bestimmten Benutzers.

Sowohl die Erkennungseinrichtung 12 wie auch die Trainingseinrichtung 14 sind üblicherweise, aber nicht notwendigerweise, als Softwaremodule ausgebildet und laufen auf einem geeigneten Computer (nicht gezeigt) ab.

## Patentansprüche

**1.** Verfahren zum iterativen Berechnen freier Parameter $\lambda_{\alpha}^{ortho(n)}$ eines Maximum-Entropie-Sprachmodells MESM mit Hilfe des Generalised-Iterative-Scaling-T rariningsalgorithmus gemäß folgender Formel:

$$\lambda_{\alpha}^{ortho(n+1)} = G(\lambda_{\alpha}^{ortho(n)}, m_{\alpha}^{ortho}, ...)$$

wobei:

n : einen Iterationsparameter;
G : eine mathematische Funktion;
$\alpha$ : ein Merkmal in dem MESM; und
$m_{\alpha}^{ortho}$ : einen gewünschten orthogonalisierten Randwert in dem MESM für das Merkmal $\alpha$;

**dadurch gekennzeichnet,**
**dass** der gewünschte orthogonalisierte Randwert $m_{\alpha}^{ortho}$ durch Linearkombination des gewünschten Randwertes $m_{\alpha}$ mit gewünschten Randwaten $m_{\beta}$ von zu dem Merkmal $\alpha$ höher-reichweitigen Merkmalen $\beta$ berechnet wird.

**2.** Verfahren nach Anspruch 1,
**dadurch gekennzeichnet,**
**dass** die Berechnung des gewünschten orthogonalisierten Randwertes $m_{\alpha}^{ortho}$ für das Merkmal $\alpha$=$\beta$0 folgende Schritte umfasst:

a) Auswählen aller Merkmale βi mit i=1...g in dem Sprachmodell, welche eine höhere Reichweite RW aufweisen als das Merkmal α=β0 und dieses jeweils einschließen;

b) Berechnen von gewünschten Randwerten mβi für die Merkmale βi mit i=0...g;

c) Sortieren der Merkmale βi mit i= 0...g nach ihrer RW;

d) Auswahl eines der Merkmale βi mit der höchsten RW;

e) Prüfen, ob es zu dem ausgewählten Merkmal βi andere Merkmale βk höherer RW gibt, welche das Merkmal βi einschließen;

f1) Wenn ja, dann Definieren eines Parameters X als Linearkombination der beim letzten Durchlauf der Schritte e) bis g) in Schritt g) berechneten orthogonaliserten Randwerte $m_{\beta\lambda}^{ortho}$ für alle im zuletzt ausgeführten Schritt e) bestimmten höher-reichweitigen Merkmale βk;

f2) Wenn nein, dann Definieren des Parameters X zu X = 0;

g) Berechnen des gewünschten orthogonalisierten Randwertes $m_{\beta i}^{ortho}$ für das Merkmal βi durch arithmetisches Verknüpfen des gewünschten Randwertes mβi mit dem Parameter X; und

h) Wiederholen der Schritte e) bis g) für das Merkmal βi-1, dessen RW kleiner oder gleich der RW des Merkmals βi ist, solange bis der gewünschte orthogonalisierte Randwert $m_{\beta 0}^{ortho}=m_{\alpha}^{ortho}$ mit i=0 in Schritt g) berechnet worden ist.

**3.** Verfahren nach Anspruch 2,
**dadurch gekennzeichnet,**
**dass** die Berechnung des Parameters X in Schritt f1) gemäß folgender Formel erfolgt:

$$X=\sum_k m_{\beta k}^{ortho}$$

**4.** Verfahren nach Anspruch 3,
**dadurch gekennzeichnet,**
**dass** die Berechnung des gewünschten orthogonalisierten Randwertes $m_{\beta i}^{ortho}$ in Schritt g) gemäß der folgenden Formel erfolgt:

$$m_{\beta i}^{ortho} = m_{\beta i} - X.$$

**5.** Verfahren nach Anspruch 2,
**dadurch gekennzeichnet,**
**dass** die Berechnung von gewünschten Randwerten $m_{\beta i}$ für die Merkmale βi mit i= 0,...,g in Schritt b) durch jeweiliges Berechnen der Häufigkeit N(βi), mit welcher das Merkmal βi in einem Trainingskorpus enthalten ist, und durch nachfolgendes Glätten des berechneten Häufigkeitswertes N(βi) erfolgt.

**6.** Verfahren nach Anspruch 5,
**dadurch gekennzeichnet,**
**dass** die Berechnung der Häufigkeit N(βi) durch Anwenden einer binären Merkmalsfunktion fβi auf den Trainingskorpus erfolgt, wobei fβi definiert ist als:

$$f_{\beta i}(h,w) = \begin{cases} 1 \text{ falls } ß_i \text{ zur Wortfolge(h,w) passt} \\ 0 \text{ sonst} \end{cases}$$

und wobei $f_{\beta i}(h,w)$ eine Aussage darüber macht, ob das Merkmal βi ein durch die Wortfolge (h,w) vorgegebenes Muster richtig beschreibt.

**7.** Verfahren nach Anspruch 1,
**dadurch gekennzeichnet,**
**dass** die mathematische Funktion G als weitere Variable die Größe eines Konvergenzschrittes $t_\alpha^{ortho}$ mit:

$$t_\alpha^{ortho} = 1/M^{ortho}$$

aufweist, wobei

Mortho : für binäre Funktionen $f_\alpha^{ortho}$ die maximale Anzahl von Funktionen repräsentiert, welche für dasselbe Argument (h,w) den Wert 1 liefern.

**8.** Verfahren nach Anspruch 7,
**dadurch gekennzeichnet,**
**dass** die Merkmalsfunktion $f_\alpha^{ortho}$ durch Linearkombination einer Merkmalsfunktion $f_\alpha$ mit orthogonalisierten Merkmalsfunktionen $f_\beta^{ortho}$ von zu dem Merkmal α höher-reichweitigen Merkmalen β berechnet wird.

**9.** Verfahren nach Anspruch 8,
**dadurch gekennzeichnet,**
**dass** die Berechnung der orthogonalisierten Merkmalsrunktion $f_\alpha^{ortho}$ für das Merkmal α=β 0 folgende Schritte umfasst:

a) Auswählen aller Merkmale βi mit i=1...g in dem Sprachmodell, welche eine höhere Reichweite RW aufweisen als das Merkmal α=β0 und dieses jeweils einschließen;

b) Berechnen von Merkmalsfunktionen fβi für die Merkmale βi mit i=0...g;

c) Sortieren der Merkmale βi mit i= 0...g nach ihrer RW;

d) Auswahl eines der Merkmale βi mit der höchsten RW;

e) Prüfen, ob es zu dem ausgewählten Merkmal βi andere Merkmale βk höherer RW gibt, welche das Merkmal βi einschließen;

f1) Wenn ja, dann Definieren einer Funktion F als Linearkombination der beim letzten Durchlauf der Schritte e) bis g) in Schritt g) berechneten orthogonalisierten Merkmalsfunktion $f_{\beta k}^{ortho}$ für alle im zuletzt ausgeführten Schritt e) bestimmten höher-reichweitigen Merkmale βk;

f2) Wenn nein, dann Definieren der Funktion F zu F = 0;

g) Berechnen der orthogonalisierten Merkmalsfunktion $f_{\beta i}^{ortho}$ für das Merkmal βi durch arithmetisches Verknüpfen der Merkmalsfunktion fβi mit der Funktion F; und

h) Wiederholen der Schritte e) bis g) für das Merkmal βi-1, dessen Reichweite kleiner oder gleich der Reichweite des Merkmals βi ist, solange bis die orthogonalisierte Merkmalsfunktion $f_{\beta 0}^{ortho}=f_{\alpha}^{ortho}$ mit i=0 in Schritt g) berechnet worden ist.

**10.** Verfahren nach Anspruch 9,
**dadurch gekennzeichnet,**
**dass** die Berechnung der Funktion F in Schritt f1) gemäß folgender Formel erfolgt:

$$F=\sum_{k} f_{\beta k}^{ortho}.$$

**11.** Verfahren nach Anspruch 9,
**dadurch gekennzeichnet,**
**dass** die Berechnung der orthogonalisierten Merkmalsfunktion $f_{\beta i}^{ortho}$ in Schritt g) gemäß der folgenden Formel erfolgt:

$$f_{\beta i}^{ortho} = f_{\beta i} - F.$$

**12.** Verfahren nach Anspruch 1,
**dadurch gekennzeichnet,**
**dass** die mathematische Funktion G folgende Gestalt hat:

$$\lambda_{\alpha}^{ortho(n+1)} = G(\lambda_{\alpha}^{ortho(n)}, m_{\alpha}^{ortho}, \ldots)$$
$$= \lambda_{\alpha}^{ortho(n)} + t_{\alpha}^{ortho} \cdot \log\left( \frac{[t_{\alpha}^{ortho} \cdot m_{\alpha}^{ortho} + b_{\alpha}]}{[t_{\alpha}^{ortho} \cdot m_{\alpha}^{ortho(n)} + b_{\alpha}]} \cdot \frac{1-\sum_{\gamma}[t_{\gamma}^{ortho} \cdot m_{\gamma}^{ortho(n)} + b_{\gamma}]}{1-\sum_{\gamma}[t_{\gamma}^{ortho} \cdot m_{\gamma}^{ortho} + b_{\gamma}]} \right)$$

wobei:

| | |
|---|---|
| $\alpha$ : | ein gerade betrachtetes Merkmal; |
| $\gamma$ : | alle Merkmale in dem Sprachmodell; |
| $t_{\alpha}^{ortho}$, $t_{\gamma}^{ortho}$ : | die Größe eines Konvergenzschrittes mit $t_{\alpha}^{ortho} = t_{\gamma}^{ortho} = 1/M^{ortho}$ mit |

$$M^{ortho} = \max_{(h,w)}\left( \sum_{\beta} f_{\beta}^{ortho}(h, w) \right);$$

| | |
|---|---|
| | wobei Mortho für binäre Funktionen $f_{\beta}^{ortho}$ die maximale Anzahl von Funktionen repräsentiert, welche für dasselbe Argument (h,w) den Wert 1 liefern; |
| $m_{\alpha}^{ortho}$, $m_{\gamma}^{ortho}$ : | gewünschte orthogonalisierte Randwerte in dem MESM für die Merkmale $\alpha$ und $\gamma$; |
| $m_{\alpha}^{ortho(n)}$, $m_{\gamma}^{ortho(n)}$ : | iterative Näherungswerte für die gewünschten Randwerte $m_{\alpha}^{ortho}$, $m_{\gamma}^{ortho}$ ; und |
| $b\alpha$ und $b\gamma$ : | Konstanten |

bezeichnen.

**13.** Verfahren nach Anspruch 1,
**dadurch gekennzeichnet,**
**dass** die mathematische Funktion folgende Gestalt hat:

$$\lambda_\alpha^{ortho(n+1)} = G(\lambda_\alpha^{ortho(n)}, m_\alpha^{ortho}, ,...) = \lambda_\alpha^{ortho(n)} + t_\alpha^{ortho} \cdot \log\left( \frac{m_\alpha^{ortho}}{m_\alpha^{ortho(n)}} \cdot \frac{1 - \sum_{\beta \in Ai(n)} (t_\beta \cdot m_\beta^{ortho(n)})}{1 - \sum_{\beta \in Ai(n)} (t_\beta \cdot m_\beta^{ortho})} \right)$$

wobei:

| | |
|---|---|
| n : | der Iterationsparameter |
| Ai(n) : | eine in dem n'ten Iterationsschritt ausgewählte Merkmalsgruppe Ai(n) mit $1 \le i \le m$; |
| $\alpha$: | ein gerade betrachtetes Merkmal aus der gerade ausgewählten Merkmalsgruppe Ai(n); |
| $\beta$: | alle Merkmale aus der Merkmalsgruppe Ai(n); |
| $t_\alpha^{ortho}$, $t_\beta^{ortho}$ : | die Größe eines Konvergenzschrittes mit $$t_\alpha^{ortho} = t_\beta^{ortho} = 1/M_{i(n)}^{ortho} \text{ mit}$$ $$M_{i(n)}^{ortho} = \max_{(h,w)} \left( \sum_{\beta \in Ai(n)} f_\beta^{ortho}(h,w) \right)$$ wobei $M_{i(n)}^{ortho}$ für binäre Funktionen $f_\beta^{ortho}$ die maximale Anzahl von Funktionen aus der Merkmalsgruppe Ai(n) repräsentiert, welche für dasselbe Argument (h,w) den Wert 1 liefern; |
| $m_\alpha^{ortho}$, $m_\beta^{ortho}$ | : gewünschte orthogonalisierte Randwerte in dem MESM für die Merkmale $\alpha$ bzw. $\beta$; |
| $m_\alpha^{ortho(n)}$, $m_\beta^{ortho(n)}$ : | iterativ Näherungswerte für die gewünschten Randwerte $m_\alpha^{ortho}$, $m_\beta^{ortho}$ ; |

wobei die Auswahl der Gruppe Ai(n) von Merkmalen $\alpha$, deren zugehörige Parameter $\lambda_\alpha^{ortho}$ in einem aktuellen Iterationsschritt angepasst werden, entweder zyklisch oder nach einem vorgegebenen Kriterium erfolgt.

**14.** Spracherkennungssystem (10) mit:

einer Erkennungseinrichtung (12) zum Erkennen des Bedeutungsinhaltes eines von einem Mikrophon (20) aufgenommenen und bereitgestellten akustischen Signals, insbesondere eines Sprachsignals, durch Abbilden von Teilen dieses Signals auf vordefinierte Erkennungssymbole, wie sie von dem implementierten Maximum Entropie Sprachmodell MESM angeboten werden, und zum Erzeugen von Ausgangssignalen, welche den erkannten Bedeutungsinhalt repräsentieren; und
einer Trainingseinrichtung (14) zum Anpassen des MESM an wiederkehrende statistische Muster in der Sprache eines bestimmten Benutzers des Spracherkennungssystems (10);

**dadurch gekennzeichnet,**
**dass** die Trainingseinrichtung (14) freie Parameter $\lambda$ in dem MESM gemäß dem Verfahren nach Anspruch 1 berechnet.

**15.** Trainingseinrichtung (14) zum Anpassen des Maximum Entropie Sprachmodells MESM in einem Spracherkennungssystem (10) an wiederkehrende statistische Muster in der Sprache eines bestimmten Benutzers des Spracherkennungssystems (10),
**dadurch gekennzeichnet,**
**dass** die Trainingseinrichtung (14) freie Parameter $\lambda$ in dem MESM gemäß dem Verfahren nach Anspruch 1 berechnet.

## Claims

**1.** A method of calculating iteration values for free parameters $\lambda_\alpha^{ortho(n)}$ of a maximum entropy speech model MESM in a speech recognition system with the aid of the generalized iterative scaling training algorithm in accordance with the following formula:

$$\lambda_\alpha^{ortho(n+1)} = G(\lambda_\alpha^{ortho(n)}, m_\alpha^{ortho}, ...)$$

where:

n : is an iteration parameter;
G : is a mathematical function;
$\alpha$ : is an attribute in the MESM; and
$m_\alpha^{ortho}$ : is a desired orthogonalized boundary value in the MESM for the attribute $\alpha$,

**characterized in that** the desired orthogonalized boundary value $m_\alpha^{ortho}$ is calculated by linearly combining the desired boundary value $m_\alpha$ with desired boundary values $m_\beta$ of attributes $\beta$ that have a larger range than the attribute $\alpha$.

**2.** A method as claimed in claim 1, **characterized in that** the calculation of the desired orthogonalized boundary value $m_\alpha^{ortho}$ for the attribute $\alpha=\beta 0$ comprises the following steps:

a) Selecting all the attributes $\beta i$ with i=1...g in the speech model that have a larger range RW than the attribute $\alpha=\beta 0$ and include the latter;
b) Calculating desired boundary values $m\beta i$ for the attributes $\beta i$ with i=0...g;
c) Sorting the attributes $\beta i$ with i= 0...g according to their RW;
d) Selecting one of the attributes $\beta i$ having the largest RW;
e) Checking whether there are other attributes $\beta k$ which include the attribute $\beta i$ and have a larger RW than the selected attribute $\beta i$;
f1) If so, defining a parameter X as a linear combination of the orthogonalized boundary values $m_{\beta k}^{ortho}$ calculated in step g) during the last run of the steps e) to g) for all the attributes $\beta k$ that have a larger range and are determined in the most recently run step e); f2) If not, defining the parameters X to X = 0;

g) Calculating the desired orthogonalized boundary value $m_{\beta i}^{ortho}$ for the attribute $\beta i$ by arithmetically combining the desired boundary value $m\beta i$ with a parameter X; and
h) Repeating the steps e) to g) for the attribute $\beta i$-1 whose RW is smaller than or equal to the RW of the attribute $\beta i$ until the desired orthogonalized boundary value $m_{\beta 0}^{ortho} = m_\alpha^{ortho}$ with i=0 has been calculated in step g).

**3.** A method as claimed in claim 2, **characterized in that** the calculation of the parameter X in step f1) is made according to the following formula:

$$X=\sum_{k} m_{\beta k}^{ortho}$$

**4.** A method as claimed in claim 3, **characterized in that** the calculation of the desired orthogonalized boundary value $m_{\beta i}^{ortho}$ is made in step g) according to the following formula:

$$m_{\beta i}^{ortho} = m_{\beta i} - X.$$

**5.** A method as claimed in claim 2, **characterized in that** the calculation of the desired boundary values $m_{\beta i}$ for the attributes βi with i= 0,...,g is made in step b) by respectively calculating the frequency N(βi), with which the attribute βi occurs in a training corpus and by subsequently smoothing the calculated frequency value N(βi).

**6.** A method as claimed in claim 5, **characterized in that** the calculation of the frequency N(βi) is made by applying a binary attribute function fβi to the training corpus where fβi is defined as:

$$f_{\beta i}(h,w)\ f_{\beta i}(h,w) = \begin{cases} 1 & \text{if } \beta_i \text{ fits in the word sequence } (h,w) \\ & \text{otherwise } 0 \end{cases}$$

and where $f_{\beta i}(h, w)$ indicates whether the attribute βi correctly describes a pattern predefined by the word sequence (h,w).

**7.** A method as claimed in claim 1, **characterized in that** the mathematical function G has as a further variable the magnitude of a convergence step $t_{\alpha}^{ortho}$ with:

$$t_{\alpha}^{ortho} = 1/\ M^{ortho}$$

where
$M^{ortho}$: represents for binary functions $f_{\alpha}^{ortho}$ the maximum number of functions which yield the value 1 for the same argument (h,w).

**8.** A method as claimed in claim 7, **characterized in that** the attribute function $f_{\alpha}^{ortho}$ is calculated by linearly combining an attribute function $f_{\alpha}$ with orthogonalized attribute functions $f_{\beta}^{ortho}$ is calculated from attributes β that have a larger range than the attribute α.

**9.** A method as claimed in claim 8, **characterized in that** the calculation of the orthogonalized attribute function $f_{\alpha}^{ortho}$ for the attribute α=β0 comprises the following steps:

a) Selecting all the attributes βi with i=1...g in the speech model that have a larger range RW than the attribute α=β0 and include the latter;
b) Calculating boundary values fβi for the attributes βi with i=0...g;
c) Sorting the attributes βi with i= 0...g according to their RW;
d) Selecting one of the attributes βi having the largest RW;
e) Checking whether there are other attributes βk which include the attribute βi and have a larger RW than the selected attribute βi;
f1) If so, defining a function F as a linear combination of the orthogonalized attribute function $f_{\beta k}^{ortho}$ calculated in step g) during the last run of the steps e) to g) for all the attributes βk that have a larger range determined

in the most recently run step e);

f2) If not, defining the function F to F = 0;

g) Calculating the orthogonalized attribute function $f_{\beta k}^{ortho}$ for the attribute βi by arithmetically combining the attribute function fβi with the function F; and

h) Repeating the steps e) to g) for the attribute βi-1 whose range is smaller than or equal to the range of the attribute βi until the orthogonalized attribute function $f_{\beta 0}^{ortho}=f_{\alpha}^{ortho}$ with i=0 has been calculated in step g).

**10.** A method as claimed in claim 9, **characterized in that** the calculation of the function F in step f1) is made according to the following formula:

$$F=\sum_k f_{\beta k}^{ortho}\ .$$

**11.** A method as claimed in claim 9, **characterized in that** the calculation of the orthogonalized attribute function $f_{\beta i}^{ortho}$ in step g) is made according to the following formula:

$$f_{\beta i}^{ortho} = f_{\beta i}-F\ .$$

**12.** A method as claimed in claim 1, **characterized in that** the mathematical function G has the following form:

$$\lambda_\alpha^{ortho(n+1)} = G(\lambda_\alpha^{ortho(n)}, m_\alpha^{ortho}, \ldots)$$

$$= \lambda_\alpha^{ortho(n)} + t_\alpha^{ortho} \cdot \log\left( \frac{[t_\alpha^{ortho} \cdot m_\alpha^{ortho} + b_\alpha]}{[t_\alpha^{ortho} \cdot m_\alpha^{ortho(n)} + b_\alpha]} \cdot \frac{1-\sum_\gamma [t_\gamma^{ortho} \cdot m_\gamma^{ortho(n)} + b_\gamma]}{1-\sum_\gamma [t_\gamma^{ortho} \cdot m_\gamma^{ortho} + b_\gamma]} \right)$$

where:

α : refers to a just considered attribute;

γ : refers to all the attributes in the speech model;

$t_\alpha^{ortho}$, $t_\gamma^{ortho}$ : refer to the size of the convergence step with $t_\alpha^{ortho} = t_\gamma^{ortho} = 1/M^{ortho}$ with

$$M^{ortho} = \max_{(h,w)}\left(\sum_\beta f_\beta^{ortho}(h,w)\right);$$

where $M^{ortho}$ for binary functions $f_\beta^{ortho}$ represents the maximum number of functions which yield the value 1 for the same argument (h,w);

$m_\alpha^{ortho}$, $m_\gamma^{ortho}$ : refers to desired orthogonalized boundary values in the MESM for the attributes α and γ;

$m_\alpha^{ortho(n)}$, $m_\gamma^{ortho(n)}$ : refers to iterative approximate values for the desired boundary values $m_\alpha^{ortho}$, $m_\gamma^{ortho(n)}$; and

bα and bγ : refer to constants.

**13.** A method as claimed in claim 1, **characterized in that** the mathematical function has the following form:

$$\lambda_\alpha^{ortho(n+1)} = G(\lambda_\alpha^{ortho(n)}, m_\alpha^{ortho}, ,...)$$
$$= \lambda_\alpha^{ortho(n)} + t_\alpha^{ortho} \cdot \log\left(\frac{m_\alpha^{ortho}}{m_\alpha^{ortho(n)}} \cdot \frac{1 - \sum_{\beta\in Ai(n)}(t_\beta \cdot m_\beta^{ortho(n)})}{1 - \sum_{\beta\in Ai(n)}(t_\beta \cdot m_\beta^{ortho})}\right)$$

where:

n : represents the iteration parameter;
Ai(n) : represents an attribute group Ai(n) with l≤i≤m selected in the $n^{th}$ iteration step;
$\alpha$ : represents a just considered attribute from the just selected attribute group Ai(n);
$\beta$ : represents all the attributes of the attribute group Ai(n);
$t_\alpha^{ortho}$, $t_\beta^{ortho}$ : represents the size of a convergence step with $t_\alpha^{ortho} = t_\beta^{ortho} = 1/M_{i(n)}^{ortho}$ with

$$M_{i(n)}^{ortho} = \max_{(h,w)}\left(\sum_{\beta\in Ai(n)} f_\beta^{ortho}(h,w)\right)$$

where $M_{i(n)}^{ortho}$ represents for binary functions $f_\beta^{ortho}$ the maximum number of functions from the attribute group Ai(n), which yield the value 1 for the same argument (h,w);
$m_\alpha^{ortho}$, $m_\beta^{ortho}$: represent desired orthogonalized boundary values in the MESM for the attributes $\alpha$ and $\beta$ respectively;
$m_\alpha^{ortho(n)}$, $m_\beta^{ortho(n)}$ : represent iterative approximate values for the desired boundary values $m_\alpha^{ortho}$, $m_\beta^{ortho}$;

where the selection of the group Ai(n) of attributes $\alpha$, whose associated parameters $\lambda_\alpha^{ortho}$ are adapted to a current iteration step is made either cyclically or according to a predefined criterion.

**14.** A speech recognition system (10) comprising: a recognition device (12) for recognizing the semantic content of an acoustic signal captured and rendered available by a microphone (20), more particularly a speech signal, by mapping parts of this signal onto predefined recognition symbols as they are offered by the implemented maximum-entropy speech model MESM, and for generating output signals which represent the recognized semantic content; and a training system (14) for adapting the MESM to recurrent statistical patterns in the speech of a certain user of the speech recognition system (10); **characterized in that** the training system (14) calculates free parameters $\lambda$ in the MESM in accordance with the method as claimed in claim 1.

**15.** A training system (14) for adapting the maximum-entropy speech model MESM in a speech recognition system (10) to recurrent statistical patterns in the speech of a certain user of this speech recognition system (10), **characterized in that** the training system (14) calculates free parameters $\lambda$ in the MESM in accordance with the method as claimed in Claim 1.

## Revendications

**1.** Procédé de calcul de valeurs d'itération pour des paramètres libres $\lambda_\alpha^{ortho(n)}$ d'un modèle de parole à entropie maximale MESM dans un système de reconnaissance de parole avec l'aide de l'algorithme d'apprentissage "Generalized Iterative Scaling" conformément à la formule suivante :

$$\lambda_\alpha^{ortho(n+1)} = G(\lambda_\alpha^{ortho(n)}, m_\alpha^{ortho}, ...)$$

dans laquelle :

n : est un paramètre d'itération;
G : est une fonction mathématique;
$\alpha$ : est une caractéristique dans le modèle MESM; et
$m_{\alpha}^{ortho}$ : est une valeur marginale orthogonalisée souhaitée dans le MESM pour la caractéristique $\alpha$,

caractérisé en ce

**que** la valeur marginale orthogonalisée $m_{\alpha}^{ortho}$ souhaitée est calculée en combinant linéairement la valeur marginale $m_{\alpha}$ souhaitée avec les valeurs marginales $m_{\beta}$ souhaitées de caractéristiques $\beta$ qui ont une portée plus grande que la caractéristique $\alpha$.

2. Procédé selon la revendication 1, **caractérisé en ce que** le calcul de la valeur marginale orthogonalisée $m_{\alpha}^{ortho}$ souhaitée pour la caractéristique $\alpha$=$\beta$0 comprend les étapes suivantes :

a) sélection de toutes les caractéristiques $\beta$i avec i=1...g dans le modèle de parole qui ont une portée RW plus grande que la caractéristique $\alpha$=$\beta$0 et comprennent cette dernière;
b) calcul des valeurs marginales souhaitées m$\beta$i pour les caractéristiques $\beta$i avec i=0...g;
c) tri des caractéristiques $\beta$i avec i= 0...g selon leur RW;
d) sélection d'une des caractéristiques $\beta$i possédant la RW plus grande;
e) contrôle de la présence d'autres caractéristiques $\beta$k qui comprennent la caractéristique $\beta$i et possèdent une portée RW plus grande que la caractéristique $\beta$i sélectionnée;
f1) le cas échéant, définition d'un paramètre X comme une combinaison linéaire des valeurs marginales orthogonalisées $m_{\beta k}^{ortho}$ calculées dans l'étape g) pendant le dernier cycle des étapes e) à g) pour toutes les caractéristiques $\beta$k qui ont une portée plus grande et sont déterminées dans le déroulement le plus récent de l'étape e);
f2) si non, définition des paramètres X à X = 0;
g) calcul de la valeur marginale orthogonalisée $m_{\beta i}^{ortho}$ souhaitée pour la caractéristique $\beta$i par association arithmétique de la valeur marginale m$\beta$i souhaitée avec un paramètre X; et
h) répétition des étapes e) à g) pour la caractéristique $\beta$i-1 dont RW est inférieure ou égale à la RW de la caractéristique $\beta$i jusqu'à ce que la valeur marginale orthogonalisée $m_{\beta 0}^{ortho}=m_{\alpha}^{ortho}$ souhaitée avec i=0 ait été calculée dans l'étape g).

3. Procédé selon la revendication 2,
caractérisé en ce
**que** le calcul du paramètre X dans l'étape f1) est effectué selon la formule suivante :

$$X=\sum_{k} m_{\beta k}^{ortho}$$

4. Procédé selon la revendication 3,
caractérisé en ce
**que** le calcul de la valeur marginale orthogonalisée $m_{\beta i}^{ortho}$ souhaitée est effectué dans l'étape g) selon la formule suivante :

$$m_{\beta i}^{ortho} = m_{\beta i} - X.$$

5. Procédé selon la revendication 2,
caractérisé en ce
**que** le calcul des valeurs marginales $m_{\beta i}$ souhaitées pour les caractéristiques $\beta$i avec i=0,...,g est effectué dans l'étape b) en calculant respectivement la fréquence N($\beta$i), à laquelle la caractéristique $\beta$i se produit dans un corpus d'apprentissage et en nivelant ensuite la valeur de fréquence calculée N($\beta$i).

**6.** Procédé selon la revendication 5,
**caractérisé en ce**
**que** le calcul de la fréquence N(βi) est effectué en appliquant une fonction caractéristique binaire fβi au corpus d'apprentissage dans laquelle fβi est défini comme :

$$f_{\beta i}(h,w)\ f_{\beta i}(h,w) = \begin{cases} 1\ si\ \beta_i \text{ entre dans la séquence de mots (h,w)} \\ \text{sinon } 0 \end{cases}$$

et dans laquelle $f_{\beta i}(h, w)$ indique si la caractéristique βi décrit correctement un modèle préalablement défini par la séquence de mots (h,w).

**7.** Procédé selon la revendication 1,
**caractérisé en ce**
**que** la fonction mathématique G a comme variable supplémentaire l'amplitude d'une étape de convergence $t_\alpha^{ortho}$ avec :

$$t_\alpha^{ortho} = 1/M^{ortho}$$

dans laquelle
Mortho : représente pour les fonctions binaires $f_\alpha^{ortho}$ le nombre maximum de fonctions qui produisent la valeur 1 pour le même argument (h,w).

**8.** Procédé selon la revendication 7,
**caractérisé en ce**
**que** la fonction caractéristique $f_\alpha^{ortho}$ est calculée en combinant linéairement une fonction caractéristique $f_\alpha$ avec des fonctions caractéristiques orthogonalisées $f_\beta^{ortho}$ à partir de caractéristiques β qui ont une portée plus grande que la caractéristique α.

**9.** Procédé selon la revendication 8,
**caractérisé en ce**
**que** le calcul de la fonction caractéristique orthogonalisée $f_\alpha^{ortho}$ pour la caractéristique α=β 0 comprend les étapes suivantes :

a) sélection de toutes les caractéristiques βi avec i=1...g dans le modèle de parole qui ont une portée RW plus grande que la caractéristique α=β0 et comprennent respectivement cette dernière;
b) calcul des fonctions caractéristiques fβi pour les caractéristiques βi avec i=0...g;
c) tri des caractéristiques βi avec i= 0...g selon leur RW;
d) sélection d'une des caractéristiques βi possédant la RW plus grande;
e) contrôle de la présence d'autres caractéristiques βk qui comprennent la caractéristique βi et possèdent une portée RW plus grande que la caractéristique βi sélectionnée;
f1) le cas échéant, définition d'une fonction F comme combinaison linéaire des fonctions caractéristiques orthogonalisées $f_{\beta k}^{ortho}$ calculées dans l'étape g) pendant le dernier cycle des étapes e) à g) pour toutes les caractéristiques βk qui ont une portée plus grande et sont déterminées dans l'étape e) exécutée en dernier lieu;
f2) si non, définition de la fonction F à F = 0;
g) calcul de la fonction caractéristique orthogonalisée $f_{\beta i}^{ortho}$ pour la caractéristique β i par association arithmétique de la fonction caractéristique fβi souhaitée avec la fonction F; et
h) répétition des étapes e) à g) pour la caractéristique βi-1 dont la portée est inférieure ou égale à la portée de la caractéristique βi jusqu'à ce que la fonction caractéristique orthogonalisée $f_{\beta 0}^{ortho}=f_\alpha^{ortho}$ avec i=0 ait été calculée dans l'étape g).

**10.** Procédé selon la revendication 9,
**caractérisé en ce**
**que** le calcul de la fonction F dans l'étape f1) est effectué selon la formule suivante :

$$F=\sum_k f_{\beta k}^{ortho}$$ .

**11.** Procédé selon la revendication 9,
**caractérisé en ce**
**que** le calcul de la fonction caractéristique orthogonalisée $f_{\beta i}^{ortho}$ dans l'étape g) est effectué selon la formule suivante :

$$f_{\beta i}^{ortho} = f_{\beta i}-F \; .$$

**12.** Procédé selon la revendication 1,
**caractérisé en ce**
**que** la fonction mathématique G a la forme suivante :

$$\lambda_\alpha^{ortho(n+1)} = G(\lambda_\alpha^{ortho(n)}, m_\alpha^{ortho}, \ldots) = \lambda_\alpha^{ortho(n)} + t_\alpha^{ortho} \cdot \log\left( \frac{[t_\alpha^{ortho} \cdot m_\alpha^{ortho} + b_\alpha]}{[t_\alpha^{ortho} \cdot m_\alpha^{ortho(n)} + b_\alpha]} \cdot \frac{1-\sum_\gamma [t_\gamma^{ortho} \cdot m_\gamma^{ortho(n)} + b_\gamma]}{1-\sum_\gamma [t_\gamma^{ortho} \cdot m_\gamma^{ortho} + b_\gamma]} \right)$$

dans laquelle :

| | |
|---|---|
| $\alpha$ : | désigne une caractéristique précisément considérée; |
| $\gamma$ : | désigne toutes les caractéristiques dans le modèle de parole; |
| $t_\alpha^{ortho}$, $t_\gamma^{ortho}$ : | désignent la taille de l'étape de convergence avec $t_\alpha^{ortho} = t_\gamma^{ortho} = 1/M^{ortho}$ avec |

$$M^{ortho} = \max_{(h,w)}\left( \sum_\beta f_\beta^{ortho}(h,w) \right);$$

| | |
|---|---|
| | où Mortho pour les fonctions binaires $f_\beta^{ortho}$ représente le nombre maximum de fonctions qui produisent la valeur 1 pour le même argument (h,w); |
| $m_\alpha^{ortho}$ , $m_\gamma^{ortho}$ : | désignent les valeurs marginales orthogonalisées souhaitées dans le modèle MESM pour les caractéristiques $\alpha$ et $\gamma$; |
| $m_\alpha^{ortho(n)}$, $m_\gamma^{ortho(n)}$ : | désignent des valeurs approximatives itératives pour les valeurs marginales $m_\alpha^{ortho}$, $m_\gamma^{ortho(n)}$ souhaitées; et |
| $b\alpha$ et $b\gamma$ : | désignent des constantes. |

**13.** Procédé selon la revendication 1,
**caractérisé en ce**
**que** la fonction mathématique possède la forme suivante :

$$\lambda_\alpha^{ortho(n+1)} = G(\lambda_\alpha^{ortho(n)}, m_\alpha^{ortho}, ,...)$$
$$= \lambda_\alpha^{ortho(n)} + t_\alpha^{ortho} \cdot \log\left( \frac{m_\alpha^{ortho}}{m_\alpha^{ortho(n)}} \cdot \frac{1 - \sum_{\beta \in Ai(n)} (t_\beta \cdot m_\beta^{ortho(n)})}{1 - \sum_{\beta \in Ai(n)} (t_\beta \cdot m_\beta^{ortho})} \right)$$

dans laquelle :

n : représente le paramètre d'itération;

Ai(n) : représente un groupe de caractéristiques Ai(n) avec l≤i≤m choisi dans la $n^{ème}$ étape d'itération;

$\alpha$ : représente une caractéristique précisément considérée à partir du groupe de caractéristiques précisément sélectionné Ai(n);

$\beta$ : représente toutes les caractéristiques du groupe de caractéristiques Ai(n);

$t_\alpha^{ortho}$, $t_\beta^{ortho}$ : représentent la taille d'une étape de convergence avec $t_\alpha^{ortho} = t_\beta^{ortho} =$

$$1/M_{i(n)}^{ortho} \text{ avec } M_{i(n)}^{ortho} = \max_{(h,w)}\left( \sum_{\beta \in Ai(n)} f_\beta^{ortho}(h,w) \right)$$

dans laquelle $M_{i(n)}^{ortho}$ représente pour des fonctions binaires $f_\beta^{ortho}$ le nombre maximum de fonctions à partir du groupe de caractéristiques Ai(n), qui produisent la valeur 1 pour le même argument (h,w);

$m_\alpha^{ortho}$, $m_\beta^{ortho}$ : représentent des valeurs marginales orthogonalisées souhaitées dans le modèle MESM, respectivement pour les caractéristiques $\alpha$ et $\beta$;

$m_\alpha^{ortho(n)}$, $m_\beta^{ortho(n)}$ : représentent des valeurs approximatives itératives pour les valeurs limitées souhaitées $m_\alpha^{ortho}$, $m_\beta^{ortho}$ ;

dans laquelle la sélection du groupe Ai(n) de caractéristiques $\alpha$, dont les paramètres associés $\lambda_\alpha^{ortho}$ sont adaptés à une étape d'itération courante est effectuée soit cycliquement, soit selon un critère préalablement défini.

**14.** Système de reconnaissance de parole (10) comprenant un dispositif de reconnaissance (12) pour la reconnaissance du contenu sémantique d'un signal acoustique enregistré et amené par un microphone (20), plus particulièrement un signal de parole, en représentant des parties de ce signal sur des symboles de reconnaissance préalablement définis tels qu'ils sont fournis par le modèle de parole à entropie maximale MESM appliqué et pour la production de signaux de sortie qui représentent le contenu sémantique reconnu et un système d'apprentissage (14) pour adapter le MESM aux modèles statistiques récurrents dans la parole d'un utilisateur donné du système de reconnaissance de parole (10);
**caractérisé en ce que** le système d'apprentissage (14) calcule des paramètres libres $\lambda$ dans le modèle MESM conformément au procédé revendiqué dans la revendication 1.

**15.** Système d'apprentissage (14) pour adapter le modèle de parole à entropie maximale MESM dans un système de reconnaissance de parole (10) à des modèles statistiques récurrents dans la parole d'un utilisateur déterminé de ce système de reconnaissance de parole (10), **caractérisé en ce que** le système d'apprentissage (14) calcule les paramètres libres $\lambda$ dans le MESM conformément au procédé revendiqué dans la revendication 1.

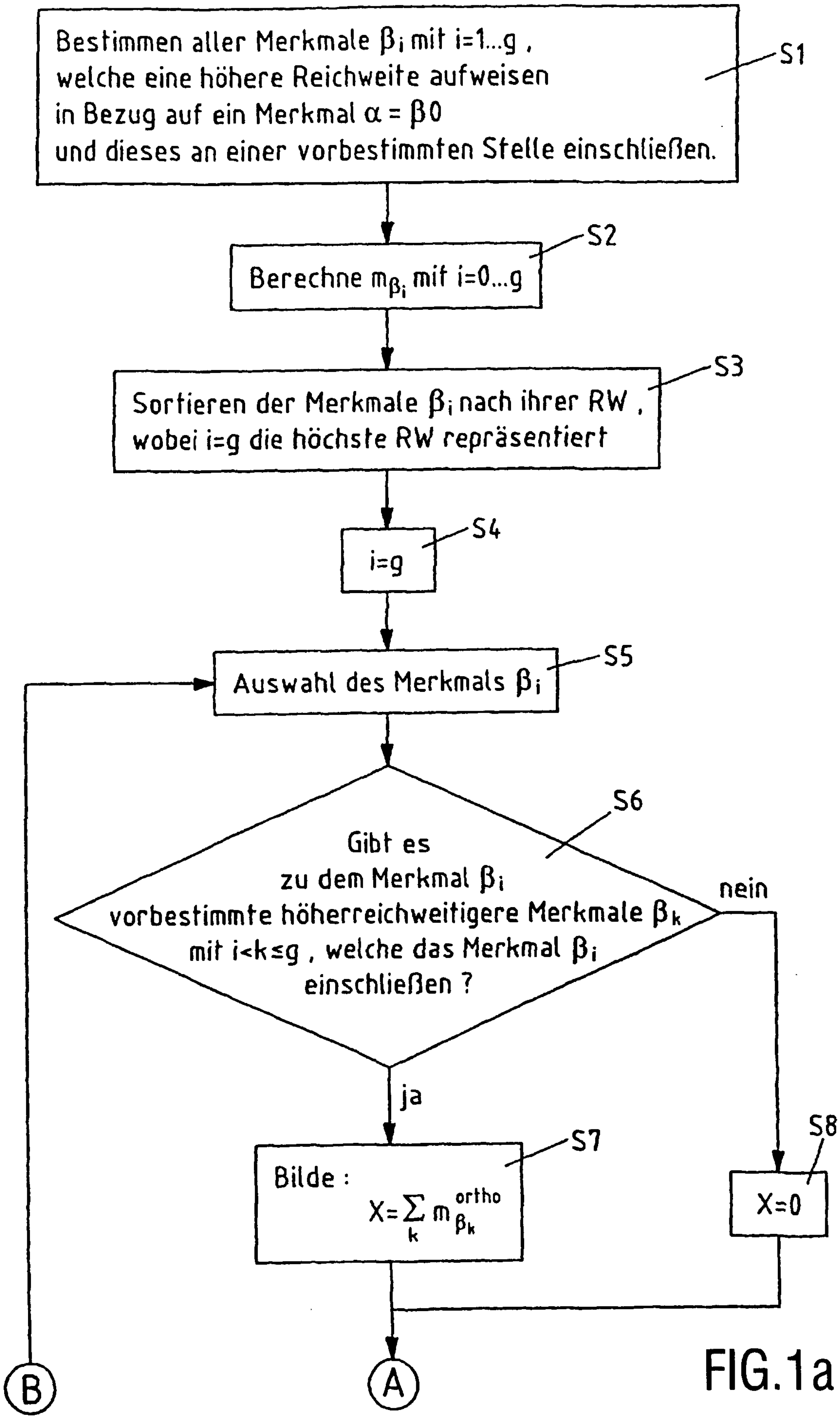
Bestimmen aller Merkmale $\beta_i$ mit i=1...g , welche eine höhere Reichweite aufweisen in Bezug auf ein Merkmal $\alpha = \beta 0$ und dieses an einer vorbestimmten Stelle einschließen.
S1
Berechne $m_{\beta_i}$ mit i=0...g
S2
Sortieren der Merkmale $\beta_i$ nach ihrer RW , wobei i=g die höchste RW repräsentiert
S3
i=g
S4
Auswahl des Merkmals $\beta_i$
S5
Gibt es zu dem Merkmal $\beta_i$ vorbestimmte höherreichweitigere Merkmale $\beta_k$ mit $i<k\leq g$ , welche das Merkmal $\beta_i$ einschließen ?
S6
nein
ja
Bilde : $X=\sum_k m_{\beta_k}^{ortho}$
S7
X=0
S8
B
A

FIG.1a

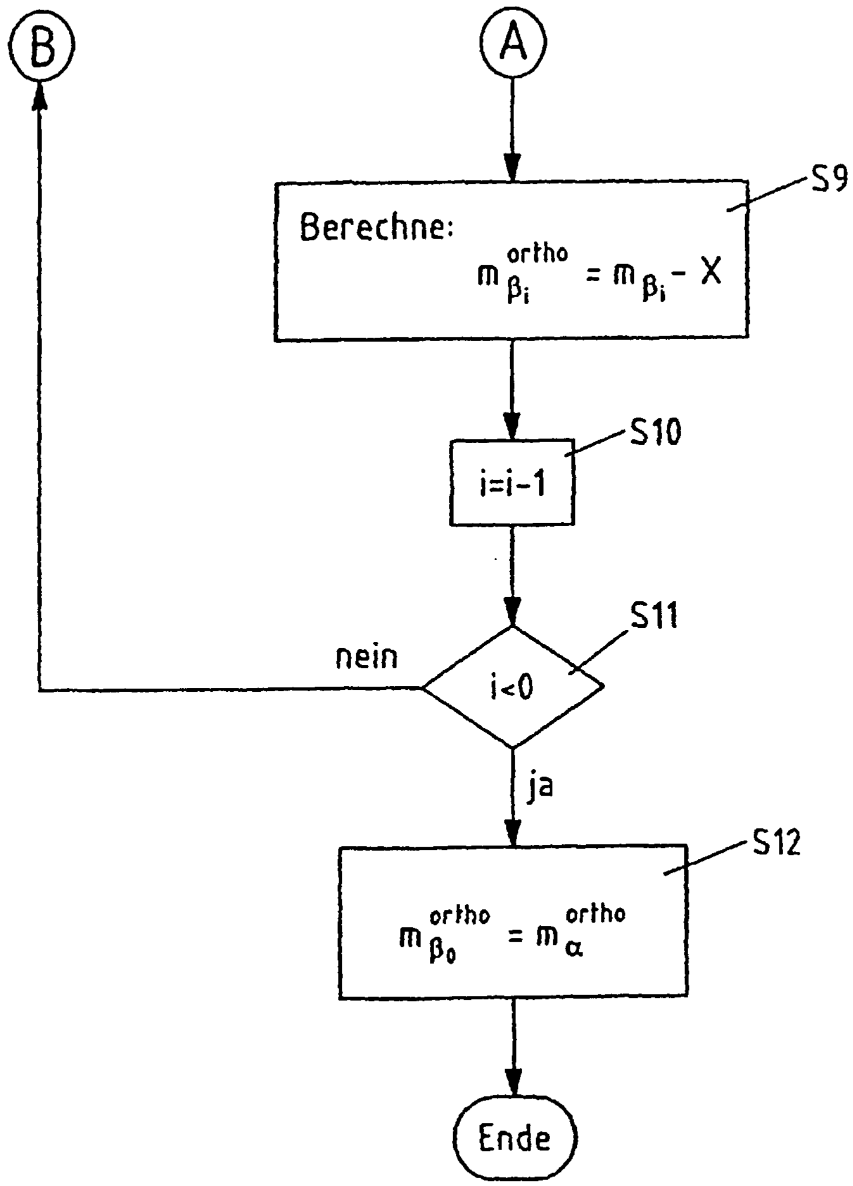
B
A
S9
Berechne:
$m_{\beta_i}^{ortho} = m_{\beta_i} - X$
S10
i=i-1
S11
nein
i<0
ja
S12
$m_{\beta_0}^{ortho} = m_{\alpha}^{ortho}$
Ende

FIG.1b

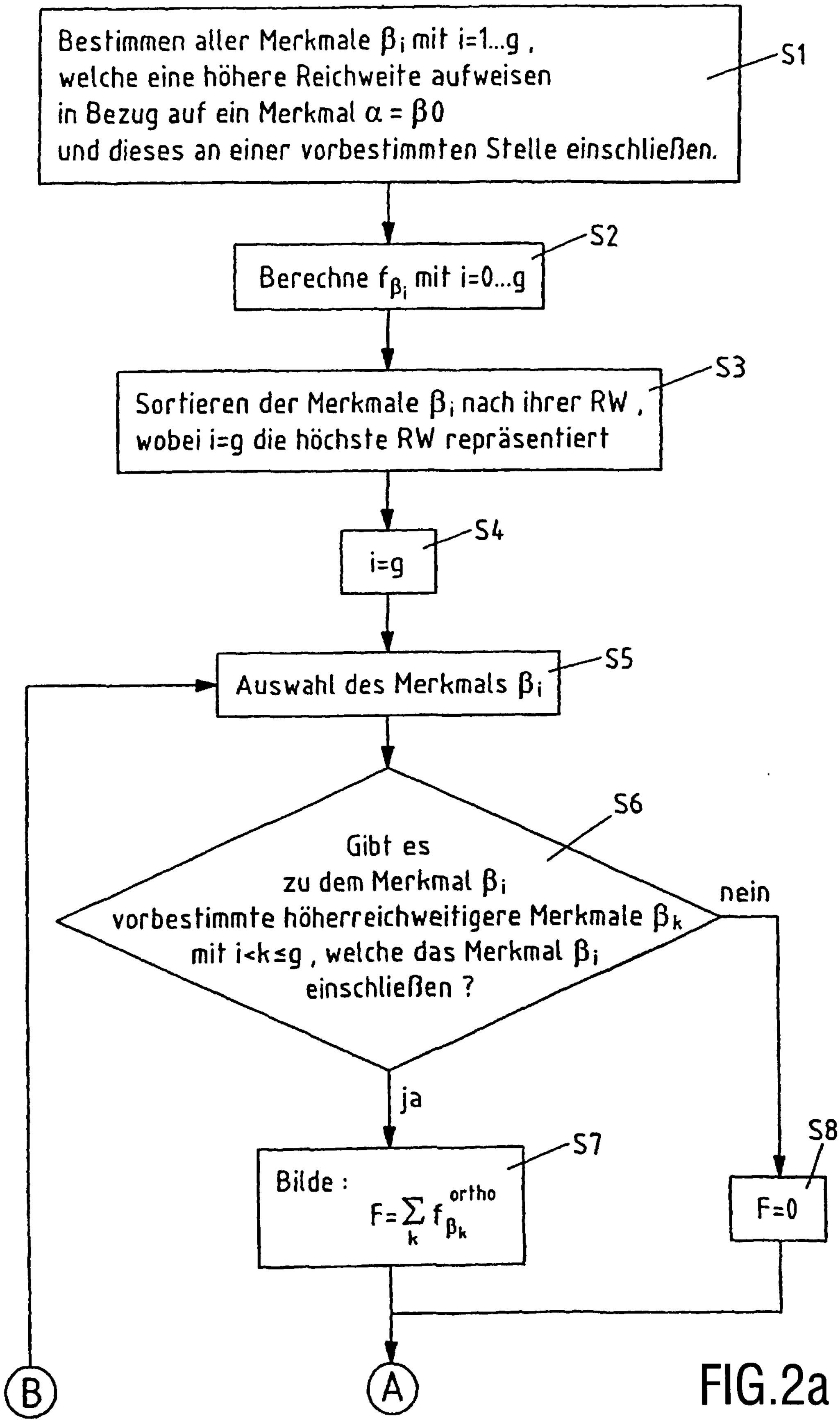
Bestimmen aller Merkmale βi mit i=1...g ,
welche eine höhere Reichweite aufweisen
in Bezug auf ein Merkmal α = β0
und dieses an einer vorbestimmten Stelle einschließen.
S1
Berechne fβi mit i=0...g
S2
Sortieren der Merkmale βi nach ihrer RW ,
wobei i=g die höchste RW repräsentiert
S3
i=g
S4
Auswahl des Merkmals βi
S5
Gibt es
zu dem Merkmal βi
vorbestimmte höherreichweitigere Merkmale βk
mit i<k≤g , welche das Merkmal βi
einschließen ?
S6
nein
ja
Bilde :
F=Σk fβk ortho
S7
F=0
S8
B
A

FIG.2a

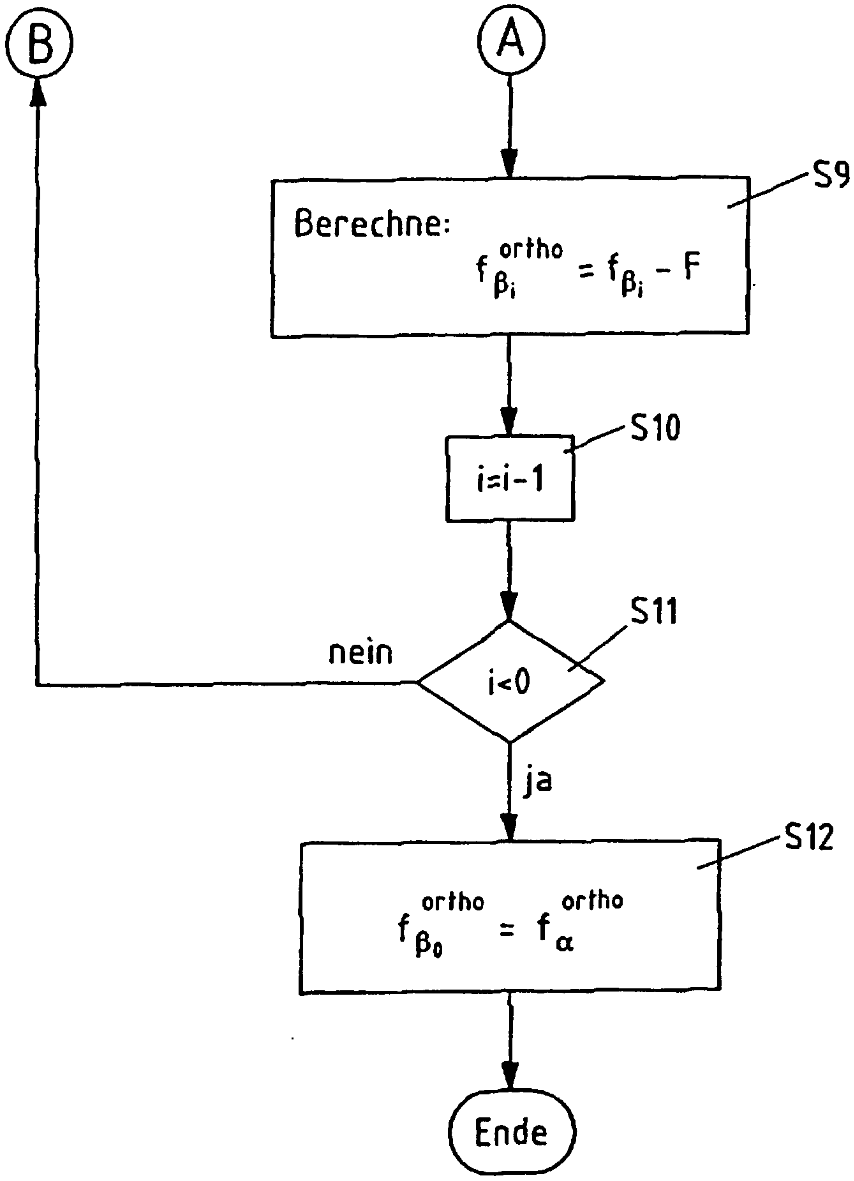
B
A
Berechne:
$f_{\beta_i}^{ortho} = f_{\beta_i} - F$
S9
i=i-1
S10
i<0
S11
nein
ja
$f_{\beta_0}^{ortho} = f_{\alpha}^{ortho}$
S12
Ende

FIG.2b

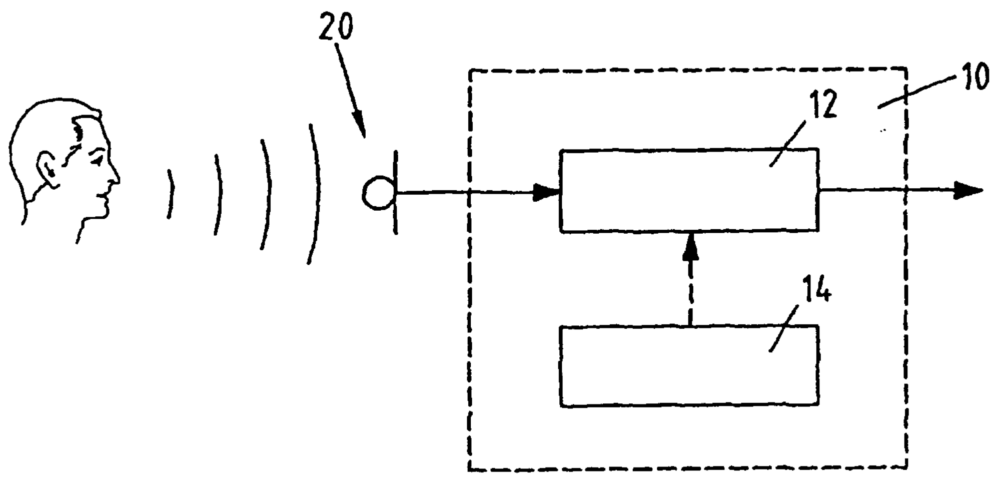
20
10
12
14

FIG.3

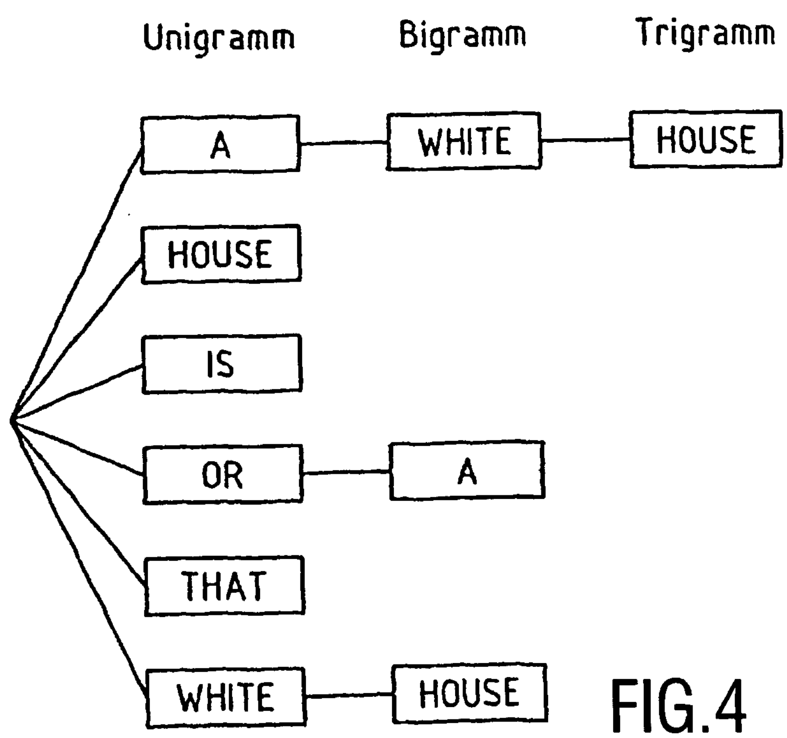
Unigramm
Bigramm
Trigramm
A
WHITE
HOUSE
HOUSE
IS
OR
A
THAT
WHITE
HOUSE

FIG.4